# EUROPEAN PATENT APPLICATION

(11) **EP 4 391 149 A1**
(43) Date of publication of application: **26.06.2024**
(21) Application number: 22873135.2
(22) Date of filing: 14.09.2022
(51) Int. Cl.: H01M 10/54, C22B 26/12, C22B 7/00, C01D 15/02, H01M 10/052, H01M 4/13, C01D 15/04

(54) **METHOD FOR RECOVERING LITHIUM PRECURSOR FROM LITHIUM SECONDARY BATTERY**

(30) Priority: 23.09.2021 KR 20210125793
(71) Applicant: SK Innovation Co., Ltd., Seoul 03188 (KR)
(72) Inventor: SEO, Young Bin, Daejeon 34124 (KR); KIM, Hyeon Jung, Daejeon 34124 (KR); PARK, Ji Yun, Daejeon 34124 (KR); SON, Sung Real, Daejeon 34124 (KR); LEE, Sang Ick, Daejeon 34124 (KR); HONG, Suk Joon, Daejeon 34124 (KR); KIM, Ji Min, Daejeon 34124 (KR)
(74) Representative: Frick, Robert
(86) International application number: PCT/KR2022/013701
(87) International publication number: WO 2023/048430

(57) **Abstract**

In a method for recovering a lithium precursor from a lithium secondary battery, an electrode powder is prepared from a lithium secondary battery. A calcium compound is mixed with the electrode powder to prepare a cathode active material mixture. The cathode active material mixture is reductive treated to form a preliminary precursor mixture. A lithium precursor is recovered from the preliminary precursor mixture. Accordingly, the lithium precursor is obtained with high purity without a complicated leaching process and an additional process resulting from a wet-based process using an acidic solution.

## Description

### [TECHNICAL FIELD]

The present invention relates to a method for recovering a lithium precursor from a lithium secondary battery. More particularly, the present invention relates to a method for recovering a high-purity lithium precursor from a waste lithium secondary battery.

### [BACKGROUND ART]

A secondary battery which can be charged and discharged repeatedly has been widely employed as a power source of a mobile electronic device such as a camcorder, a mobile phone, a laptop computer, etc., according to developments of information and display technologies. Examples of the secondary battery includes, e.g., a lithium secondary battery, a nickel-cadmium battery, a nickel-hydrogen battery, etc. The lithium secondary battery is actively developed and applied due to high operational voltage and energy density per unit weight, a high charging rate, a compact dimension, etc.

The lithium secondary battery may include an electrode assembly including a cathode, an anode and a separation layer (separator), and an electrolyte immersing the electrode assembly. The lithium secondary battery may further include an outer case having, e.g., a pouch shape for accommodating the electrode assembly and the electrolyte.

A lithium composite oxide may be used as a cathode active material for the lithium secondary battery. The lithium composite oxide may further contain a transition metal such as nickel, cobalt, manganese, etc.

As the above-mentioned high-cost valuable metals are used for the cathode active material, 20% or more of a production cost is required for manufacturing the cathode material. Additionally, as environment protection issues have recently been highlighted, a recycling method of the cathode active material is being researched.

Conventionally, a method of sequentially recovering valuable metals by leaching a waste cathode active material into a strong acid such as sulfuric acid has been used, but a wet process is disadvantageous from an aspect of a regeneration selectivity, a regeneration time, etc., and may cause environmental pollution.

For example, Japanese Patent Publication No. 2019-178395 discloses a method of recovering a lithium precursor using a wet method. However, in this case, reduction of purity by impurities generated from materials and components other than the lithium precursor may be caused. Thus, researches of a method for recovering a lithium precursor of high purity using a dry-based reaction are needed.

### DETAILED DECRIPTIONS OF THE INVENTION

### [Technical Objective]

According to an aspect of the present invention, there is provided a method for recovering a lithium precursor from a used lithium secondary battery with high purity.

### [Technical Means]

In a method for recovering a lithium precursor from a lithium secondary battery according to example embodiments, an electrode powder is prepared from a lithium secondary battery. A calcium compound is mixed with the electrode powder to prepare a cathode active material mixture. The cathode active material mixture is reductive treated to form a preliminary precursor mixture. A lithium precursor is recovered from the preliminary precursor mixture.

In some embodiments, the lithium secondary battery may include an End-of-Life (EOL) lithium secondary battery.

In some embodiments, preparing the electrode powder may include dry-grinding the lithium secondary battery.

In some embodiments, the electrode powder may include components derived from a cathode active material, an anode active material, a binder, a conductive material and an electrolyte solution.

In some embodiments, preparing the cathode active material mixture or forming the preliminary precursor mixture may include at least partially removing the components derived from the anode active material, the electrolyte solution, the conductive material and the binder by reacting with the calcium compound.

In some embodiments, the components derived from the anode active material, the electrolyte solution, the conductive material and the binder may include a fluorine component and a carbon component.

In some embodiments, the calcium compound may include calcium oxide.

In some embodiments, reacting the electrode powder with the calcium compound may include mixing the calcium compound that contains calcium elements 0.5 to 1.5 times of fluorine elements contained in the electrode powder.

In some embodiments, preparing the cathode active material mixture may include heat-treating the electrode powder and the calcium compound together at a temperature of 300 to 600 °C, preferably 400 to 500 °C.

In some embodiments, the reductive treatment may include a dry reduction using a hydrogen gas or a carbon-based material.

In some embodiments, a temperature of the reductive treatment may be in a range from 400 to 600°C.

In some embodiments, recovering the lithium precursor from the preliminary precursor mixture may include washing the preliminary precursor mixture with water to obtain a lithium precursor hydrate.

In some embodiments, a recovery ratio of lithium hydroxide in the lithium precursor hydrate may be 93% or more.

### [Effects of the Invention]

According to the above-described example embodiments, a lithium precursor may be recovered from a waste lithium-ion battery through a dry-based process using a dry reductive process. Accordingly, the lithium precursor may be obtained with high purity without a complicated leaching process and an additional process resulting from a wet-based process using an acidic solution.

In example embodiments, an EOL lithium secondary battery-derived waste electrode active material may be mixed with a calcium compound to react with calcium before impurities such as hydrogen fluoride, carbon dioxide, etc., generated in the dry reductive process react with lithium, thereby improving yield of the lithium precursor.

### [Brief Descriptions of the Drawings]

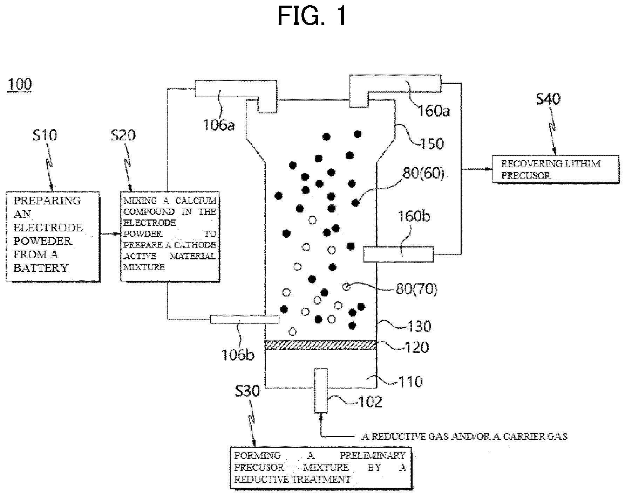

FIG. 1 is a schematic flow diagram for describing a method for recovering a lithium precursor of a lithium secondary battery in accordance with exemplary embodiments.

### [Embodiments for Practicing the Invention]

Embodiments of the present invention provide a high-purity, high-yield method for recovering a lithium precursor from a lithium secondary battery by a dry reductive reaction.

Hereinafter, embodiments of the present invention will be described in detail with reference to an accompanying drawing. However, these are merely exemplary, and are not intended to limit the present invention to a specific embodiment disclosed herein.

As used herein, the term "EOL (end-of-life) lithium secondary battery" includes a battery with an ended life-span after being produced as a final product, or a lithium secondary battery used and wasted before the life-span is ended after being produced as a final product. For example, the battery which a 25% power reduction occurs may be included based on the United States Advanced Battery Consortium (USABC) standard.

As used herein, the term "precursor" is used to comprehensively refer to a compound including a specific metal to provide the specific metal included in an electrode active material.

As used herein, the term "electrode powder" may refer to a raw material that are introduced into a reducing reaction treatment to be described later after current collectors of a cathode and an anode are substantially removed from a waste battery.

FIG. 1 is a schematic flow diagram for describing a method for recovering a lithium precursor of a lithium secondary battery in accordance with example embodiments. For convenience of descriptions, FIG. 1 includes a schematic diagram of a reactor together with the process flow.

Referring to FIG. 1, a cathode active material mixture may be prepared from a cathode of a lithium secondary battery (e.g., in a process of S10).

A process of recovering lithium from the lithium secondary battery may include, e.g., a method of recovering lithium from a scrap or a from an end-of-life (EOL) lithium secondary battery.

The scrap may include a cathode material or a cathode material scrap generated in a process of manufacturing a secondary battery, and may have no contact with an anode or no use-history to hardly generate impurities in a recovery process raw material of the lithium precursor. The EOL lithium secondary battery is different from the scrap in that the EOL lithium secondary battery is manufactured as a final product and has a use-history of use. Accordingly, in the case of the lithium precursor recovery process for the EOL lithium secondary battery, a starting material includes more impurities generated from the cathode, the electrolyte, etc., than those from the scrap above.

For example, a content of the impurities calculated as a mass ratio of the impurities to a total mass of the electrode powder in the EOL lithium secondary battery may be eight times or more of those from the scrap. A content of carbon components in the impurities in the EOL lithium secondary battery may be 12 times or more of those from the scrap. A content of fluorine components in the impurities in the EOL lithium secondary battery may be 1.5 times or more of those from the scrap.

In the present invention, a process to be described later for an EOL lithium secondary battery may be performed. Therefore, even though the impurities are contained more than those in the cathode material scrap, a recovery ratio of the lithium precursor may be higher than that of the lithium precursor recovery process for the cathode material scrap.

The lithium secondary battery may include an electrode assembly including a cathode, an anode and a separation layer interposed between the cathode and the anode, and an electrolyte solution immersing the electrode assembly. The cathode and the anode may include a cathode active material layer and an anode active material layer coated on a cathode current collector and an anode current collector, respectively.

For example, the cathode active material included in the cathode active material layer may include an oxide containing lithium and a transition metal.

In some embodiments, the cathode active material may include a compound represented by Chemical Formula 1 below.

[Chemical Formula 1] LiₓM1ₐM2_{b}M3_{c}O_{y}

In Chemical Formula 1, M1, M2 and M3 may be a transition metal selected from Ni, Co, Mn, Na, Mg, Ca, Ti, V, Cr, Cu, Zn, Ge, Sr, Ag, Ba, Zr, Nb, Mo, Al, Ga B. In Chemical Formula 1, 0<x≤1.1, 2≤y≤2.02, 0<a<1, 0<b<1, 0<c<1, and 0<a+b+c≤1.

In some embodiments, the cathode active material may be an NCM-based lithium oxide including nickel, cobalt and manganese. In this case, M1, M2 and M3 in Formula 1 may be Ni, Co and Mn, respectively.

The cathode active material layer may include a conductive material and a binder together with the cathode active material described above.

The conductive material may be included to promote an electron transfer between active material particles. For example, a carbon-based material such as graphite, carbon black, graphene, carbon nanotube, etc., or a metal-based material such as tin, tin oxide, titanium oxide, a perovskite material including LaSrCoO₃ or LaSrMnO₃, etc., may be included.

The binder may include, e.g., a vinylidene fluoride-hexafluoropropylene copolymer (PVDF-co-HFP), polyvinylidene fluoride (PVDF), polyacrylonitrile, polymethyl methacrylate, styrene butadiene rubber (SBR), poly vinyl alcohol, polyacrylic acid (PAA), carboxymethylcellulose (CMC), hydroxypropyl cellulose, diacetyl cellulose. The above-described exemplary binder may also be used in the anode in addition to the cathode.

In example embodiments, the anode active material may a material capable of intercalating and de-intercalating lithium ions known in the related art without a particular limitation. For example, a carbon-based material such as crystalline carbon, amorphous carbon, carbon composite, and carbon fiber; a lithium alloy; a silicon (Si)-based compounds or tin may be used.

In some embodiments, the anode active material layer may include a conductive material and a binder together with the above-described anode active material.

For example, the conductive material may include a material substantially the same as or similar to materials used for the cathode.

In some embodiments, the electrolyte solution may include a non-aqueous electrolyte solution. The non-aqueous electrolyte solution may include a lithium salt as an electrolyte and an organic solvent. The lithium salt may be represented by, e.g., Li⁺X⁻. An anion (X-) of the lithium salt may F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, etc.

According to embodiments, the preparation of the electrode powder may include separating a waste battery into a cell unit, discharging the cell and separating the current collector from the cell.

In some embodiments, separating the waste battery into the cell unit may include separating a case and an electric wiring of the waste battery, separating the waste battery to a module unit and separating the module unit to a cell unit.

Even in the waste battery, electric charges remaining in the lithium-ion battery may be present. Accordingly, flames or sparks may be generated during the treatment. Thus, the discharge may be performed before the lithium secondary battery is treated to prevent a risk of fire.

In some embodiments, the discharge may be performed by immersing the EOL lithium-ion battery in a brine. In this case, the brine discharge may be performed for 72 hours or more.

In some embodiments, the discharge may be performed using a separate discharger. For example, in the brine discharge, salts may remain on a cell or lithium may be dissolved in the brine to degrade a lithium precursor recovery ratio in the recovery process described below. Accordingly, a discharge using the discharger may be more advantageous for the lithium precursor recovery process.

In example embodiments, separating the current collector from the lithium secondary battery may include separating the electrode active material layer from the electrode current collector. In some embodiments, separating the current collector from the lithium secondary battery may be performed simultaneously with a dry pulverization to be described later on the cell subjected to the discharge process.

In example embodiments, preparing of the electrode powder may include the dry pulverization of the lithium secondary battery. Accordingly, the electrode powder may be manufactured in the form of a powder.

In some embodiments, the separated electrode active material layer may be pulverized to generate the electrode powder. Accordingly, the electrode powder may be prepared in the form of a powder, and may be collected in the form of, e.g., the black powder.

In example embodiments, the electrode powder may include some components derived from the anode active material, the electrolyte solution, the conductive material and the binder in addition to the cathode active material.

In some embodiments, the electrode powder may have an average particle diameter (D50) (an average particle diameter in a volume accumulation distribution) of about 5 µm to about 100 µm. Within the above range, the reductive reaction through a fluidized bed reactor as described later may be easily performed.

For example, in a step of S20, a calcium compound may be mixed with the electrode powder to prepare a cathode active material mixture.

In some embodiments, preparing the cathode active material mixture or forming a preliminary precursor mixture as will be described later may include at least partially removing components derived from the anode active material, the electrolyte solution, the conductive material and the binder by reacting with the calcium compound.

In some embodiments, the components derived from the anode active material, the electrolyte solution, the conductive material and the binder may include a fluorine component and a carbon component. When the fluorine component and the carbon component react with lithium, lithium fluoride (LiF) and lithium carbonate (Li₂CO₃) may be formed to reduce the yield of the lithium precursor. Thus, when the cathode active material mixture is prepared by mixing the calcium compound with electrode powder, the fluorine component and the carbon component may react with calcium in advance during a heat treatment or a reduction treatment to form calcium fluoride (CaF₂) and calcium carbonate (CaCO₃).

In example embodiments, the calcium compound may preferably include calcium oxide (CaO). When calcium oxide is mixed with the electrode powder, the fluorine component and the carbon component may react with calcium before reacting with lithium to suppress lithium from reacting with impurities. Thus, the yield of the lithium precursor of a recovery target may be improved.

In example embodiments, reacting the calcium compound with the electrode powder may include mixing the calcium compound containing 0.5 to 1.5 times calcium elements compared to fluorine elements contained in the electrode powder. The reaction of the calcium compound with hydrogen fluoride (HF) and carbon dioxide (CO₂) may be optimized within the above range, so that the recovery ratio of the lithium precursor may be improved.

In some embodiments, the cathode active material mixture may be heat-treated before being introduced into a reductive reactor 100 to be described later. Impurities such as the anode active material, the electrolyte solution, the conductive material and the binder included in the waste cathode active material mixture may be removed or reduced by the heat treatment. Thus, the lithium-transition metal oxide may be introduced into the reductive reactor with high purity.

In example embodiments, preparing the cathode active material mixture may include heat-treating the electrode powder and the calcium compound together at a temperature of 300 to 600°C, preferably 400 to 500°C.

In example embodiments, preparing the cathode active material mixture may include at least partially removing the components derived from the cathode active material, the electrolyte solution, the conductive material and the binder by reacting the cathode active material with the calcium compound. The components derived from the anode active material, the electrolyte solution, the conductive material and the binder may include the fluorine component and the carbon component. For example, when performing the heat treatment at a temperature of 400 to 600°C, the components derived from the anode active material, the electrolyte solution, the conductive material and the binder such as hydrogen fluoride and carbon dioxide may react with calcium in advance to lithium to form calcium fluoride (CaF₂) and calcium carbonate (CaCO₃).

For example, a temperature of the heat treatment temperature may be about 600°C or less, from about 300 to 600°C in one embodiment, preferably from about 400 to 500°C. Within the above range, decomposition and damage of the lithium-transition metal oxide may be prevented while substantially removing impurities.

In one embodiment, the heat treatment may be performed in the reductive reactor 100. In this case, a carrier gas such as nitrogen (N₂), helium (He), argon (Ar), etc., may be injected through a reaction gas flow path 102 connected to a lower portion of the reactor 110, and a fluidization heat treatment may be performed in the reductive reactor 100.

In one embodiment, the cathode active material mixture may be separately heat-treated and then introduced into the reductive reactor 100.

For example, in a process of S30, the cathode active material mixture may be reduced in the reductive reactor 100 to form a preliminary precursor mixture 80.

As illustrated in FIG. 1, the reductive reactor 100 may be divided into a reactor body 130, a reactor lower portion 110 and a reactor upper portion 150. The reactor body 130 may include a heating member such as a heater or may be integrated with the heating member.

The cathode active material mixture may be supplied into the reactor body 130 through supply flow paths 106a and 106b. The cathode active material mixture may be dropped through a first supply flow path 106a connected to the reactor upper portion 150 or may be injected through a second supply flow path 106b connected to a e bottom of the reactor body 130. In one embodiment, the first and second supply flow paths 106a and 106b may be used together to supply the cathode active material mixture.

For example, a supporter 120 may be disposed between the reactor body 130 and the reactor lower portion 110 so that powders of the cathode active material mixture may be landed. The supporter 120 may include pores or injection ports through which a reductive reaction gas and/or a carrier gas may passe during the reduction treatment to be described below.

The reductive reaction gas for converting the cathode active material mixture into a preliminary precursor may be supplied into the reactor body 130 through a reaction gas flow path 102 connected to the reactor lower portion 110.

In example embodiments, the reduction treatment may include a dry reduction using a hydrogen gas or a carbon-based material.

In some embodiments, a reductive gas provided during the reduction treatment may include hydrogen (H₂) gas. Additionally, a carrier gas such as nitrogen (N₂) and argon (Ar) may be further included.

In some embodiments, a hydrogen concentration in the reductive reaction gas may be in a range from about 10 to 40 volume%(vol%). The hydrogen concentration may be a volume% of hydrogen in a total volume of a mixed gas.

In example embodiments, a temperature of the reduction treatment may be adjusted in a range from about 400 to 800°C, preferably from about 400 to 600°C, more preferably about 400 to 500°C.

Additionally, the reduction treatment may be finely controlled through process conditions such as the hydrogen concentration, the reaction temperature, a reductive reaction time.

During the reduction treatment, the hydrogen gas may be supplied from a lower portion of the reductive reactor 100, and may contact the cathode active material mixture. Accordingly, while the cathode active material mixture moves to the reactor upper portion 150 or may stay in the reactor body 130, the cathode active material mixture may react with the reductive reaction gas to be converted into the preliminary precursor mixture 80.

In some embodiments, the hydrogen gas or the carrier gas may be injected during the reduction treatment to form a fluidized bed in the reactor body 130. Accordingly, the reductive reactor 100 may serve as a fluidized bed reactor.

That is, in accordance with example embodiments, forming of the preliminary precursor mixture 80 may include performing the reduction treatment of the cathode active material mixture in the fluidized bed reactor.

Rising, staying and falling of the cathode active material mixture are repeated during the treatment of the cathode active material mixture in the fluidized bed, a reaction contact time may be increased and dispersion of particles may be improved. Thus, the preliminary precursor mixture 80 having a uniform size may be obtained.

However, the concepts of the present invention are not necessarily limited to the fluidized bed reaction. For example, after pre-loading of the cathode active material mixture into a batch reactor or a tubular reactor, a fixed-type reaction may be performed while supplying the reductive reactive gas.

In some embodiments, the lithium-transition metal oxide may be reductively treated so that a preliminary lithium precursor 60 including, e.g., lithium hydroxide (LiOH), lithium oxide (e.g., LiO₂), and a transition metal or a transition metal oxide maybe generated.

For example, a crystal structure of Li(NCM)O₂ may be collapsed during the reduction process, and Li may be separated from the crystal structure. NiO and CoO may be generated from the crystal structure, and both Ni and Co phases may be generated as the reduction process continues.

Forming the preliminary precursor mixture 80 may include at least partially removing components derived from the anode active material, the electrolyte solution, the conductive material and the binder by reacting with the calcium compound.

Components derived from the anode active material, the electrolyte solution, the conductive material and the binder may include the fluorine component and the carbon component. If the fluorine component and the carbon component react with lithium, lithium fluoride (LiF) and lithium carbonate (Li2CO₃) may be formed to reduce the yield of the lithium precursor. Accordingly, calcium oxide as the calcium compound may be included in the cathode active material mixture, hydrogen fluoride (HF) and carbon dioxide (CO₂) which are impurities generated during the high-temperature reduction treatment may be induced to react with calcium in advance.

For example, calcium fluoride (CaF₂) and calcium carbonate (CaCO₃) may be produced in advance to lithium fluoride (LiF) and lithium carbonate (Li₂CO₃), and thus yield of lithium precursor particles 60 in the preliminary precursor mixture 80 may be improved. Accordingly, the recovery ratio of a target material may be remarkably improved.

After the reduction treatment, the preliminary precursor mixture 80 containing the preliminary lithium precursor particles 60 and transition metal-containing particles 70 (e.g., the transition metal or the transition metal oxide) may be formed in the reactor body 130. The preliminary lithium precursor particles 60 may include, e.g., lithium hydroxide (LiOH), lithium oxide (LiO₂) and/or lithium carbonate (Li₂CO₃), and may preferably be lithium hydroxide (LiOH).

In example embodiments, recovering the lithium precursor from the preliminary precursor mixture 80 may include washing the preliminary precursor mixture 80 with water to obtain a lithium precursor hydrate (e.g., process S40).

For example, the preliminary precursor mixture 80 obtained through the dry reduction process may be collected for a subsequent recovery process.

In an embodiment, the transition metal-containing particles 70 including nickel, cobalt or manganese may be relatively heavier than the preliminary lithium precursor particles 60. Thus, the preliminary lithium precursor particles 60 may be collected through outlets 160a and 160b in advance.

In one embodiment, the preliminary lithium precursor particles 60 may be discharged through a first outlet 160a connected to the reactor upper portion 150. Thus, a selective recovery of the preliminary lithium precursor particles 60 according to a weight gradient may be promoted.

In one embodiment, the preliminary precursor mixture 80 including the preliminary lithium precursor particles 60 and the transition metal-containing particles 70 may be collected through a second outlet 160b connected to the reactor body 130. Thus, the preliminary precursor mixture 80 may be directly recovered from a fluidized bed formation region to increase the yield.

In one embodiment, the preliminary precursor mixture 80 may be collected through the first and second outlets 160a and 160b.

The preliminary lithium precursor particles 60 collected through the outlet 160 may be recovered as the lithium precursor.

For example, water (e.g., distilled water) may be directly added into the reactor body 130 to recover the lithium precursor from the preliminary precursor mixture 80 obtained through the dry reduction process.

In some embodiments, the preliminary lithium precursor particles 60 in the preliminary precursor mixture 80 may be washed with water. Through the washing treatment above, the preliminary lithium precursor particles in the form of lithium hydroxide (LiOH) may be substantially dissolved in water, separated from the transition metal precursor, and recovered in advance. The lithium precursor (lithium precursor hydrate) substantially consisting of lithium hydroxide may be obtained by performing a crystallization process, etc., of lithium hydroxide dissolved in water.

In example embodiments, a recovery rate of lithium hydroxide in the lithium precursor hydrate may be 93% or more. The term "recovery ratio" herein refers to a product of a conversion ratio and a selectivity. The "conversion rate" refers to a ratio of a lithium weight dissolved in water to a lithium weight in the initial electrode powder. The "selectivity" refers to a weight ratio of a lithium compound (e.g., lithium hydroxide, lithium carbonate or lithium fluoride) remaining in an aqueous solution with respect to a weight of lithium dissolved in water. Accordingly, a high purity lithium precursor hydrate may be recovered from the waste lithium secondary battery.

In example embodiments, when the above-described lithium precursor recovery process is performed on the EOL lithium secondary battery, the lithium hydroxide recovery ratio may become higher than that in the case performed on the scrap.

In one embodiment, the preliminary lithium precursor particles in the form of lithium oxide and lithium carbonate may be substantially removed through the washing treatment. In one embodiment, the preliminary lithium precursor particles in the form of lithium oxide and lithium carbonate may be at least partially converted into lithium hydroxide through the washing treatment.

Optionally, lithium carbonate (e.g., Li₂CO₃) may be obtained as the lithium precursor by reacting the preliminary lithium precursor particles 60 with a carbon-containing gas such as carbon monoxide (CO) or carbon dioxide (CO₂). The crystallized lithium precursor may be obtained through the reaction with the carbon-containing gas. For example, lithium carbonate may be collected by injecting the carbon-containing gas together during the washing process.

A temperature of the crystallization reaction using the carbon-containing gas may be, e.g., in a range of about 60 to 150°C. Lithium carbonate of high reliability may be produced without damaging ae crystal structure in the temperature range.

As described above, according to example embodiments, the lithium precursor may be recovered from the waste cathode through a continuous dry process.

According to embodiments of the present invention, the lithium precursor is collected through the dry reducing reaction excluding the use of a solution. Therefore, by-products may be reduced to increase the yield, and a treatment for wastewater is not required, thereby an environment-friendly process design may be realized.

Hereinafter, specific experimental examples for enhancing the understanding of the present invention are presented, but this is merely illustrative of the present invention and does not limit the accompanying claims. It is obvious to those skilled in the art that various modifications and modifications to the embodiments are possible within the scope of the scope and technical idea of the present invention. Such alterations and modifications are duly included in the appended claims.

### Example 1

A battery case and wirings were removed from an end-of-life (EOL) waste battery, and a cell-unit lithium secondary battery was obtained. After discharging the EOL lithium secondary battery in the cell unit using a discharger, the battery was cut into units of several centimeters using Shredder and Cut Crusher. An aluminum foil as a current collector and an electrode active material in copper foil were separated using Impact Crusher from the cut cell. Thereafter, aluminum and copper were removed using a Twist Screen, heat-treated at 450°C for 1 hour, and then pulverized through a milling to obtain 1 kg of an electrode powder.

7 g of calcium oxide was mixed with 200 g of the electrode powder to prepare a cathode active material mixture. The prepared cathode active material mixture was introduced into a fluidized bed reactor.

100% nitrogen gas was injected from a reactor lower portion at a flow rate of 5.5 L/min while the temperature at an inside of the reactor was maintained at 480°C to perform a fluidized heat treatment for 3 hours.

After the heat treatment process, the temperature of the reactor was lowered to 460°C, and a mixture gas of 20 vol% hydrogen/80 vol% nitrogen was injected from the reactor lower portion at a flow rate of 5.5 L/min for 4 hours to proceed with a reductive reaction. A temperature at the inside of the fluidized bed reactor was maintained at 460°C. After the reductive reaction, a temperature of the reactor was lowered to 25°C to achieve a preliminary precursor mixture.

The obtained preliminary precursor mixture and water (19 times; based on weight) were added together and stirred. A concentration of lithium dissolved in water was analyzed, and a lithium conversion ratio was measured through a ratio of a lithium weight dissolved in water to a lithium weight in the initial electrode powder.

Additionally, a selectivity was measured through a molar concentration of lithium hydroxide, lithium carbonate and lithium fluoride remaining in the aqueous solution.

### Comparative Example

### Comparative Example 1

The same process as that in Example 1 was performed except calcium oxide was not included. The evaluation results are also shown in Table 1.

### Comparative Example 2

The same process as that in Example 1 was performed except that electrode powder were prepared from a scrap-derived waste cathode, not from a lithium-ion battery. However, in this case, the processes of separating the waste battery in cell unit and discharging the waste battery of Example 1 were omitted. The evaluation results are also shown in Table 1 below.

**[Table 1]**

| | unit | Example 1 | Comparative Example 1 | Comparative Example 2 |
|---|---|---|---|---|
| lithium conversion ratio | % | 98.4 | 81.2 | 83 |
| lithium hydroxide selectivity | % | 94.6 | 74.5 | 98.2 |
| lithium carbonate selectivity | % | 0 | 1.0 | 1.7 |
| lithium fluoride selectivity | % | 1.0 | 24.5 | 0.1 |
| lithium hydroxide recovery ratio | % | 93.0 | 60.5 | 81.5 |

Referring to Table 1, when calcium oxide was included within the range according to the above-described embodiments in the process of recovering the lithium precursor from the EOL lithium secondary battery, the lithium conversion ratio and the lithium precursor recovery ratio were remarkably high. Further, it was confirmed that lithium carbonate and lithium fluoride were converted to calcium carbonate and calcium fluoride. Moreover, when the recovery process was performed on the electrode powder derived from the EOL battery, it was confirmed that the lithium hydroxide recovery ratio was higher than that when the electrode powder was derived from the scrap.

## Claims

1. A method for recovering a lithium precursor from a lithium secondary battery, comprising:
preparing an electrode powder from a lithium secondary battery;
mixing a calcium compound with the electrode powder to prepare a cathode active material mixture;
reductive treating the cathode active material mixture to form a preliminary precursor mixture; and
recovering a lithium precursor from the preliminary precursor mixture.

2. The method of claim 1, wherein the lithium secondary battery includes an End-of-Life (EOL) lithium secondary battery.

3. The method of claim 1, wherein preparing the electrode powder comprises dry-grinding the lithium secondary battery.

4. The method of claim 1, wherein the electrode powder comprises components derived from a cathode active material, an anode active material, a binder, a conductive material and an electrolyte solution.

5. The method of claim 4, wherein preparing the cathode active material mixture or forming the preliminary precursor mixture comprises at least partially removing the components derived from the anode active material, the electrolyte solution, the conductive material and the binder by reacting with the calcium compound.

6. The method of claim 5, wherein the components derived from the anode active material, the electrolyte solution, the conductive material and the binder include a fluorine component and a carbon component.

7. The method of claim 5, wherein the calcium compound includes calcium oxide.

8. The method of claim 6, wherein reacting the electrode powder with the calcium compound includes mixing the calcium compound that contains calcium elements 0.5 to 1.5 times of fluorine elements contained in the electrode powder.

9. The method of claim 1, wherein preparing the cathode active material mixture comprises heat-treating the electrode powder and the calcium compound together at a temperature of 300 to 600 °C.

10. The method of claim 1, wherein the reductive treatment includes a dry reduction using a hydrogen gas or a carbon-based material.

11. The method of claim 1, wherein a temperature of the reductive treatment is in a range from 400 to 600°C.

12. The method of claim 1, wherein recovering the lithium precursor from the preliminary precursor mixture comprises washing the preliminary precursor mixture with water to obtain a lithium precursor hydrate.

13. The method of claim 12, wherein a recovery ratio of lithium hydroxide in the lithium precursor hydrate is 93% or more.
